# EUROPEAN PATENT APPLICATION

(11) **EP 4 471 762 A1**
(43) Date of publication of application: **04.12.2024**
(21) Application number: 23201237.7
(22) Date of filing: 02.10.2023
(51) Int. Cl.: G10L 15/22, G06V 20/59, G10L 13/00

(54) **SMART VEHICLE ASSISTANT SYSTEM WITH ARTIFICIAL INTELLIGENCE**

(30) Priority: 29.05.2023 TR 202306162
(71) Applicant: DIZAYNVIP TEKNOLOJI BILISIM VE OTOMOTIV SANAYI A.S., Istanbul-Avcilar (TR)
(72) Inventor: SULTANOGLU, Serdar, Avcilar/Istanbul (TR)
(74) Representative: Sach, Greg Robert

(57) **Abstract**

The invention relates to a smart car assistant system with artificial intelligence designed for use in automobiles, VIP vehicles, commercial vehicles and smart home systems, which recognizes the user's face, detects the user's emotional state, offers suggestions according to the detected emotion, and has a two-dimensional or three-dimensional holographic face to create an emotional connection between the user and the vehicle and to create the feeling of a real human being when speaking, has the ability to chat, get information, ask and get answers, dictate text, read news, give weather information, send e-mails, and allows voice control of the equipment in the vehicle, can translate in different languages, can tell the vehicle malfunctions, can transmit range information, makes it possible to perceive the commands given by speaking in a daily and natural speaking language, in Turkish or in the desired language, and to answer the questions asked, and allows shopping while in the vehicle.

## Description

### TECHNICAL FIELD

The invention relates to a smart car assistant system with artificial intelligence designed for use in automobiles, VIP vehicles, commercial vehicles and smart home systems, which recognizes the user's face, detects the user's emotional state, offers suggestions according to the detected emotion, and has a two-dimensional or three-dimensional holographic face to create an emotional connection between the user and the vehicle and to create the feeling of a real human being when speaking, has the ability to chat, get information, ask and get answers, dictate text, read news, give weather information, send e-mails, and allows voice control of the equipment in the vehicle, can translate in different languages, can tell the vehicle malfunctions, can transmit range information, makes it possible to perceive the commands given by speaking in a daily and natural speaking language, in Turkish or in the desired language, and to answer the questions asked, and allows shopping while in the vehicle.

### PRIOR ART

People establish emotional connections with other people or living creatures and thus continue their lives. It's nice to bond with someone, to feel that someone understands, cares, and protects you. However, these feelings only occur between humans and other living creatures.

Automobiles, VIP vehicles and similar vehicles purchased with large budgets do not have the quality to allow the user to create emotional connections and cannot go beyond being a pile of metal. Emotional connections cannot be established with the vehicles used today, communication cannot be ensured with natural speaking language, these vehicles do not recognize their owners, cannot detect and learn the behaviors and emotions of their owners, cannot answer the questions asked, and most importantly, these vehicles do not have a face.

There are voice assistant systems in the vehicles produced by some vehicle manufacturers, and these systems can only perform a limited number of operations such as turning on and off and controlling equipment such as multimedia and air conditioning. In addition, these systems only work with the specified commands, and when something different is said other than these commands, these words are not perceived by the system.

Apart from the voice assistant systems mentioned above, there are also applications provided by some mobile devices and these applications only allow the use of features of the mobile device such as navigation and multimedia on the vehicle screen.

There is a need for an smart vehicle assistant that will provide establishing an emotional connection with the vehicle used, recognize and detect the face and emotions of the user, make suggestions, speak in a natural speaking language, in Turkish or in the desired language and answer questions.

Thus, the need to eliminate such shortcomings and disadvantages of the embodiments and practices employed in the prior art entails an improvement in the respective tehnical field.

### AIM OF THE INVENTION

The present disclosure relates to a smart car assistant with artificial intelligence developed for eliminating the aforementioned disadvantages and providing new advantages to the respective technical field.

The aim of the invention is to provide an smart vehicle assistant with a face.

Another aim of the invention is to provide creating an smart vehicle assistant that recognizes the user's face, detects the emotional state and offers suggestions according to the detected emotion.

Another aim of the invention is to provide an smart vehicle assistant that enables the user to create an emotional connection with his/her vehicle.

Another aim of the invention is to provide the creation of an smart vehicle assistant with features such as reading news, giving weather information, sending e-mails, creating notes and recording alarms.

Another aim of the invention is to provide a smart vehicle assistant, which allows voice control of the equipment in the vehicle by detecting what is said in daily and natural speaking language, in Turkish or in the desired language, and also has the ability to answer the questions asked.

Another aim of the invention is to provide the translation of what is spoken in the vehicle to the desired language, thanks to its ability to translate in different languages.

Another aim of the invention is to enable the user to be told audibly how far can be traveled with the remaining fuel or battery amount, as well as the malfunctions that may occur in the vehicle.

Another aim of the invention is to provide a structure that enables shopping via voice commands while in the vehicle, thus saving time and creating convenience for the user.

The structural and characteristic features of the present disclosure, including all of its advantages, will be more clearly understood when the detailed description given below is read, and thus, the present disclosure should be evaluated by taking this detailed description into consideration.

### DETAILED DESCRIPTION OF THE INVENTION

The preferred embodiments of the smart car assistant system with artificial intelligence according to the present disclosure, which are mentioned in this detailed description, are only intended for providing a better understanding of the subject-matter, and should not be construed in any restrictive sense.

The invention relates to a smart car assistant system with artificial intelligence designed for use in automobiles, VIP vehicles, commercial vehicles and smart home systems, which recognizes the user's face, detects the user's emotional state, offers suggestions according to the detected emotion, and has a two-dimensional or three-dimensional holographic face to create an emotional connection between the user and the vehicle and to create the feeling of a real human being when speaking, has the ability to chat, get information, ask and get answers, dictate text, read news, give weather information, send e-mails, and allows voice control of the equipment in the vehicle, can translate in different languages, can tell the vehicle malfunctions, can transmit range information, makes it possible to perceive the commands given by speaking in a daily and natural speaking language, in Turkish or in the desired language, and to answer the questions asked, and allows shopping while in the vehicle.

The system of the invention generally comprises at least one camera to visually detect the user and their emotional state, at least one microphone for voice recognition of what is said by the user, at least one speaker to provide audio feedback to the user, at least one speech-to-text module (STT (Speech to Text)) to convert what the user says into digital text and make it suitable for use by the system, at least one text-to-speech conversion module (TTS (Text to Speech)) to ensure that the digital text data generated by the system is transmitted to the user as speech, at least one Noise Cancellation module (Noise Cancellation) to ensure the elimination of noise inside the vehicle or in the environment and the healthy perception of user conversations, at least one natural language processing module (NLP (Neuro Linguistic Programming)) for interpretation of this data after user speech is translated into digital text, at least one dataset module where the data to be used in response to what the user says is loaded, at least one dashboard module (Dashboard) to ensure that all tools and platforms where the system is located are remotely controlled instantaneously, problems occurring in the system are displayed and these problems are resolved, and the system is updated remotely, at least one electronic card with a processor to provide perception of the user and the user's emotional state through image processing based on visual data from the camera, activation of the system through the detection of the wake-up word, translating user speech into digital text and transmitting it to the natural language processing module, translating the texts generated by the system into spoken speech and transmitting them to the user via a speaker, receiving and processing the vehicle's malfunctions, range and similar information from the OBD brain in the vehicle via Canbus line, websocket, ethernet, RF or bluetooth, sending signals to lighting, seats, windows, doors and similar equipment in the vehicle via Canbus line, websocket, ethernet, RF or bluetooth, storing the data obtained as a result of the user's repetitive routine behavior in a database or in the cloud and using this data when the user gets into the vehicle, at least one ChatGPT or similar chat service to enable the system to chat with the user, at least one question and answer module to enable the system to answer the questions asked by the user, at least one translation service to ensure that the language translation function requested by the user is fulfilled, at least one news reading service to provide news reading to the user, at least one e-mail service to ensure that incoming e-mails are read to the user and the user can send e-mails with voice command, at least one shopping service to enable the user to shop in the vehicle and with voice commands, a two-dimensional face display or a three-dimensional face display with hologram hardware to enable the user to emotionally connect with the vehicle and talk to it as if it were a person.

When the user gets into the vehicle, the visual data of the user's face is captured by the camera and this visual data is transmitted to the electronic card with the processor connected to the camera, the visual data from the camera is subjected to image processing by the electronic card with the processor and compared with the photos defined in the database, if the person is recognized, the system welcomes the person by addressing the person by name through the speaker connected to the electronic card. For example, "Welcome Mr. Serdar".

The user's face is subjected to image processing by means of an electronic card with a processor, emotional expressions on the face such as happy, sad, angry, etc. are identified by means of emotion recognition software, and as a result of this identification, the relevant suggestion in the data set is transmitted to the user through the speaker connected to the electronic card. For example, "You look unhappy today, would you like me to play your favorite music?"

When the user wants to control the hardware in the vehicle, he/she speaks the wake-up word and the action to be performed, the wake-up word and the command for the action to be performed are received through the microphone and transmitted to the electronic card with the processor, the spoken words are converted into text by the speech-to-text conversion module and transmitted to the natural language processing module for interpretation, depending on the operation to be performed, a signal is sent to the relevant point via Canbus line, websocket, ethernet, RF or bluetooth to control the relevant hardware of the vehicle, in addition, after the interpretation process in the natural language processing module, the speech obtained by the text-to-speech conversion module is transmitted to the user through the speaker connected to the electronic card. For example, in response to a user's request to "turn on the lights", the system says "OK, I'm turning on the lights" and the lights turn on.

Information such as the vehicle's malfunction, current battery or current fuel status and the distance that can be traveled therewith is transmitted from the vehicle's OBD brain to the electronic card with the processor via Canbus line, websocket, ethernet, RF or bluetooth, the incoming information is converted into speech through the text-to-speech module and transmitted to the user with the help of the speaker connected to the electronic card.

When the user wants to chat, the wake-up word and the request speech are received by the microphone, transmitted to the electronic card connected to the microphone and transcribed by the speech-to-text module, the texts are transferred to the natural language processing module for interpretation and the chat service is started, what is said is transmitted to the chat service in text form, the response texts from the chat service are transferred to the text-to-speech module for conversion into speech, and the generated speech is transmitted to the user through the speaker connected to the electronic card with the processor. For example, "Hey Dizzy, can I talk to you for a minute?" and the answer is "OK, let's talk" and "What do you think about global warming?" and the system continues the conversation with logical answers.

When the user is curious about the answer to a question, he/she asks his/her question after the wake-up word, this question is received through the microphone and transmitted to the electronic card with the processor and converted into text by the speech-to-text module, the generated text is transferred to the natural language processing module for interpretation and after interpretation, the question and answer module is activated, the question and answer module searches for the answer to the question in various search engines or online library platforms, the answers found are converted into speech by the text-to-speech module and transmitted to the user through the speaker connected to the electronic card with the processor. For example, the answer to the question "Which is the highest mountain in the world?" is transmitted to the user by voice.

The operations performed by the user in the vehicle or the features used in the vehicle are recorded in the database or cloud inside the electronic card, when the recorded data is repeated at certain intervals, the electronic card detects it and when the user gets into the vehicle, various settings are made automatically and the user's information is used in the conversations generated by the system.

When the user asks the system to translate a word or a sentence, he/she expresses this request with a wake-up word, which is received by the microphone and transmitted to the electronic card with a processor, the request is converted into text by the speech-to-text module and transferred to the natural language processing module and the interpretation process takes place, after interpretation, the translation service, which translates in 22 languages, is activated, the text to be translated is transmitted to the translation service and the translated text received from the translation service is converted into speech by means of the speech conversion module and transmitted to the user through the speaker connected to the electronic card with the processor. For example, if you say "I need you to translate into Japanese", the sentence is voiced by the system in Japanese.

When the user wants to access current news, he/she expresses this request with the wake-up word and this request is received by the microphone and transmitted to the electronic card with the processor, the request is converted into text by the speech-to-text conversion module and transferred to the natural language processing module and the interpretation process takes place, after the interpretation, the news reading service runs, the generated text is transferred to the news reading service and the news texts from the news reading service are converted into speech by the text-to-speech conversion module and transmitted to the user through the speaker connected to the electronic card with the processor. For example, when the user says "Can you read the economic news from CNN Türk?", the system reads the current economic news from this source to the user.

When the user wants an e-mail to be sent or incoming e-mails to be read, he/she expresses this request with the wake-up word and this request is received by the microphone and transmitted to the electronic card with the processor, the request is converted into text by the speech-to-text module and transferred to the natural language processing module and the interpretation process takes place, after the interpretation, the e-mail service is activated, the e-mail address previously defined in the system is logged in, the speech that the user expresses to send is converted into text by means of the speech-to-text conversion module and sent to the relevant person via the e-mail service, in case of incoming e-mail, the e-mail content is converted into speech by the text-to-speech conversion module and read to the user through the speaker connected to the electronic card with the processor. For example, when you say "I want you to send an e-mail to Mr. Serdar", the system asks for the content of the e-mail and the generated e-mail is forwarded to the relevant person; if an e-mail arrives, the system asks "a new e-mail has arrived, do you want me to read it?" and when "yes, read it" is said, the e-mail content is read.

When the user wants to shop, he/she expresses this request with the wake-up word and this request is received by the microphone and transmitted to the electronic card with the processor, the request is converted into text by the speech-to-text module and transferred to the natural language processing module and the interpretation process takes place, after the interpretation, the shopping service is activated, and the shopping platform, which is predefined in the system, is accessed, the user speaks the product he/she wants to search for and this speech is received by the microphone and transmitted to the electronic card with the processor, the spoken words are converted into text by the speech-to-text conversion module and transmitted to the shopping service and the searched product is found in the search engine and added to the shopping cart and the purchase takes place, the text of the searched product content is converted into speech by the text-to-speech conversion module and transmitted to the user audibly through the speaker connected to the electronic card, and the user is also informed that the product has been purchased. For example, when you say "I want to buy a navy blue jacket", the product you are looking for is found and the purchase is made by adding it to the cart.

The wake-up word is listened continuously by the microphone. As soon as the wake-up word is captured by the microphone, the system is activated by an electronic card with a processor and the spoken words are transmitted to the other modules. Without a wake-up word, the system would have to listen to all conversations, which would be contrary to the protection of personal data.

In the system of the invention, the assistant image on the two-dimensional screen and/or the three-dimensional assistant image created by means of hologram hardware moves the lips and mouth according to the speech performed by the system in order to provide the user with the experience of speaking as if there is a human being in front of the user. This creates an emotional connection between the user and the vehicle, and the users feel as if they are talking to a real person.

## Claims

1. A smart vehicle assistance system with artificial intelligence, **characterized in that** it comprises
- at least one camera to visually detect the user and their emotional state,
- at least one microphone for voice recognition of what is said by the user,
- at least one speaker to provide audio feedback to the user,
- at least one speech-to-text module to convert what the user says into digital text and make it suitable for use by the system,
- at least one text-to-speech conversion module to ensure that the digital text data generated by the system is transmitted to the user as speech,
- at least one noise cancellation module to ensure the elimination of noise inside the vehicle or in the environment and the healthy perception of user conversations,
- at least one natural language processing module for interpretation of this data after user speech is translated into digital text,
- at least one dataset module where the data to be used in response to what the user says is loaded,
- at least one dashboard module to ensure that all tools and platforms where the system is located are remotely controlled instantaneously, problems occurring in the system are displayed and these problems are resolved, and the system is updated remotely,
- at least one electronic card with a processor to provide perception of the user and the user's emotional state through image processing based on visual data from the camera, activation of the system through the detection of the wake-up word, translating user speech into digital text and transmitting it to the natural language processing module, translating the texts generated by the system into spoken speech and transmitting them to the user via a speaker, receiving and processing the vehicle's malfunctions, range and similar information from the OBD brain in the vehicle via Canbus line, websocket, ethernet, RF or bluetooth, sending signals to lighting, seats, windows, doors and similar equipment in the vehicle via Canbus line, websocket, ethernet, RF or bluetooth, storing the data obtained as a result of the user's repetitive routine behavior in a database or in the cloud and using this data when the user gets into the vehicle,
- at least one ChatGPT or similar chat service to enable the system to chat with the user,
- at least one question and answer module to enable the system to answer the questions asked by the user,
- at least one translation service to ensure that the language translation function requested by the user is fulfilled,
- at least one news reading service to provide news reading to the user,
- at least one e-mail service to ensure that incoming e-mails are read to the user and the user can send e-mails with voice command,
- at least one shopping service to enable the user to shop in the vehicle and with voice commands,
- at least one two-dimensional display and/or at least one hologram assembly to create an assistant image, allowing the user to establish an emotional connection with the vehicle and to speak as if there is someone in front of them.

2. An operation method of a smart vehicle assistance system with artificial intelligence, **characterized in that** it includes the following process steps:
- when the user gets into the vehicle, the visual data of the user's face is captured by the camera and this visual data is transmitted to the electronic card with the processor connected to the camera, the visual data from the camera is subjected to image processing by the electronic card with the processor and compared with the photos defined in the database, if the person is recognized, the system welcomes the person by addressing the person by name through the speaker connected to the electronic card,
- the visual data of the user's face is subjected to image processing by means of an electronic card with a processor, emotional expressions on the face such as happy, sad, angry, etc. are identified by means of emotion recognition software, and as a result of this identification, the relevant suggestion in the data set is transmitted to the user through the speaker connected to the electronic card,
- the wake-up word is continuously listened to by the microphone and as soon as the wake-up word is captured by the microphone, the system is activated by an electronic card with a processor and the spoken words are transmitted to the other modules,
- the assistant image on the two-dimensional screen and/or the three-dimensional assistant image created by means of hologram hardware moves the lips and mouth according to the speech performed by the system in order to provide the user with the experience of speaking as if there is a human being in front of the user,
- when the user wants to control the hardware in the vehicle, he/she speaks the wake-up word and the action to be performed, the wake-up word and the command for the action to be performed are received through the microphone and transmitted to the electronic card with the processor, the spoken words are converted into text by the speech-to-text conversion module and transmitted to the natural language processing module for interpretation, depending on the operation to be performed, a signal is sent to the relevant point via Canbus line, websocket, ethernet, RF or bluetooth to control the relevant hardware of the vehicle, in addition, after the interpretation process in the natural language processing module, the speech obtained by the text-to-speech conversion module is transmitted to the user through the speaker connected to the electronic card,
- information such as the vehicle's malfunction, current battery or current fuel status and the distance that can be traveled therewith is transmitted from the vehicle's OBD brain to the electronic card with the processor via Canbus line, websocket, ethernet, RF or bluetooth, the incoming information is converted into speech through the text-to-speech module and transmitted to the user with the help of the speaker connected to the electronic card,
- when the user wants to chat, the wake-up word and the request speech are received by the microphone, transmitted to the electronic card connected to the microphone and transcribed by the speech-to-text module, the texts are transferred to the natural language processing module for interpretation and the chat service is started, what is said is transmitted to the chat service in text form, the response texts from the chat service are transferred to the text-to-speech module for conversion into speech, and the generated speech is transmitted to the user through the speaker connected to the electronic card with the processor,
- when the user is curious about the answer to a question, he/she asks his/her question after the wake-up word, this question is received through the microphone and transmitted to the electronic card with the processor and converted into text by the speech-to-text module, the generated text is transferred to the natural language processing module for interpretation and after interpretation, the question and answer module is activated, the question and answer module searches for the answer to the question in various search engines or online library platforms, the answers found are converted into speech by the text-to-speech module and transmitted to the user through the speaker connected to the electronic card with the processor,
- the operations performed by the user in the vehicle or the features used in the vehicle are recorded in the database or cloud inside the electronic card, when the recorded data is repeated at certain intervals, the electronic card detects it and when the user gets into the vehicle, various settings are made automatically and the user's information is used in the conversations generated by the system,
- when the user asks the system to translate a word or a sentence, he/she expresses this request with a wake-up word, which is received by the microphone and transmitted to the electronic card with a processor, the request is converted into text by the speech-to-text module and transferred to the natural language processing module and the interpretation process takes place, after interpretation, the translation service, which translates in 22 languages, is activated, the text to be translated is transmitted to the translation service and the translated text received from the translation service is converted into speech by means of the speech conversion module and transmitted to the user through the speaker connected to the electronic card with the processor,
- when the user wants to access current news, he/she expresses this request with the wake-up word and this request is received by the microphone and transmitted to the electronic card with the processor, the request is converted into text by the speech-to-text conversion module and transferred to the natural language processing module and the interpretation process takes place, after the interpretation, the news reading service runs, the generated text is transferred to the news reading service and the news texts from the news reading service are converted into speech by the text-to-speech conversion module and transmitted to the user through the speaker connected to the electronic card with the processor,
- when the user wants an e-mail to be sent or incoming e-mails to be read, he/she expresses this request with the wake-up word and this request is received by the microphone and transmitted to the electronic card with the processor, the request is converted into text by the speech-to-text module and transferred to the natural language processing module and the interpretation process takes place, after the interpretation, the e-mail service is activated, the e-mail address previously defined in the system is logged in, the speech that the user expresses to send is converted into text by means of the speech-to-text conversion module and sent to the relevant person via the e-mail service, in case of incoming e-mail, the e-mail content is converted into speech by the text-to-speech conversion module and read to the user through the speaker connected to the electronic card with the processor,
- when the user wants to shop, he/she expresses this request with the wake-up word and this request is received by the microphone and transmitted to the electronic card with the processor, the request is converted into text by the speech-to-text module and transferred to the natural language processing module and the interpretation process takes place, after the interpretation, the shopping service is activated, and the shopping platform, which is predefined in the system, is accessed, the user speaks the product he/she wants to search for and this speech is received by the microphone and transmitted to the electronic card with the processor, the spoken words are converted into text by the speech-to-text conversion module and transmitted to the shopping service and the searched product is found in the search engine and added to the shopping cart and the purchase takes place, the text of the searched product content is converted into speech by the text-to-speech conversion module and transmitted to the user audibly through the speaker connected to the electronic card, and the user is also informed that the product has been purchased.
